# EUROPÄISCHE PATENTSCHRIFT

(11) **EP 1 501 883 B1**
(45) Veröffentlichungstag und Bekanntmachung des Hinweises auf die Patenterteilung: **14.12.2005**
(21) Anmeldenummer: 03722488.8
(22) Anmeldetag: 16.04.2003
(51) Int. Cl.: C08G 75/23, C08J 7/12, C08G 85/00

(54) **SUBSTITUIERTER POLYARYLETHERFORMK RPER, VERFAHREN ZU SEINER HERSTELLUNG UND SEINE VERWENDUNG**
SUBSTITUTED POLYARYLETHER MOULDED BODY, METHOD FOR THE PRODUCTION THEREOF AND USE OF THE SAME
CORPS MOULE EN PORYLARYLETHER SUBSTITUE, PROCEDE DE FABRICATION ET UTILISATION DUDIT CORPS MOULE

(30) Priorität: 26.04.2002 DE 10218587
(43) Veröffentlichungstag der Anmeldung: 02.02.2005
(73) Patentinhaber: Membrana GmbH, 42289 Wuppertal-Barmen (DE)
(72) Erfinder: GEHLEN, Arne, 63743 Aschaffenburg (DE)
(74) Vertreter: Schröder, Richard
(86) Internationale Anmeldenummer: PCT/EP2003/003949
(87) Internationale Veröffentlichungsnummer: WO 2003/091313

(56) Entgegenhaltungen:
- EP-A- 0 621 301
- WO-A-02/08301
- WO-A-92/01735

## Beschreibung

Die vorliegende Erfindung betrifft einen substituierten Polyaryletherformkörper, Verfahren zur seiner Herstellung und seine Verwendung.

EP-B-0 540 592 beschreibt einen Formkörper aus Polysulfon (PSu), Polyethersulfon (PES) oder Polyetherketon (PEK), der in einer ersten Reaktionsstufe vemetzt und sulfoniert wird. Auf der Oberfläche des vemetzten und sulfonierten Formkörpers liegen nebeneinander Sulfonsäuregruppen, Hydroxymethylgruppen und Ethergruppen vor. Der in solcher Weise modifizierte Formkörper wird in einer nachgeschalteten Reaktion mit hydroxyl- oder carbonylgruppenhaltigen Verbindungen, kondensierbaren Aromaten oder mit anderen Verbindungen zur Reaktion gebracht, die mit den auf der Oberfläche des Formkörpers vorhandenen Gruppen, also mit den Sulfonsäuregruppen, Hydroxymethylgruppen und Ethergruppen Reaktionen eingehen. Dadurch entsteht ein an den vorhandenen Gruppen mit den genannten Verbindungen modifizierter PSu-, PES- oder PEK-Formkörper, der, weil keine Reaktion vollständig abläuft, zusätzlich die nicht umgesetzten Sulfonsäure-, Hydroxymethyl- und Ethergruppen enthält. Somit enthält der vemetzte Formkörper eine Vielzahl verschiedener Funktionalitäten und kann deshalb nicht die spezifische Wirkung entfalten, die für bestimmte Anwendungen, wie z.B. für die Adsorptionschromatographie, gewünscht wird. Zudem sind die freien Sulfonsäuregruppen der Biokompatibilität des Formkörpers abträglich. Schließlich ist das Verfahren zur Herstellung des substituierten Formkörpers zweistufig, d.h. aufwendig.

Daher stellt sich die vorliegende Erfindung die Aufgabe, einen spezifisch substituierten Polyaryletherformkörper zur Verfügung zu stellen, der keine Sulfonsäuregruppen aufweist und einfacher herstellbar ist.

Diese Aufgabe wird gelöst durch einen Formkörper enthaltend einen Polyarylether, an dessen Oberfläche Substituenten der Formel (I) 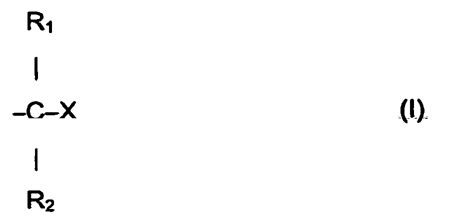 gebunden sind, wobei R₁ = H oder ein Alkylrest mit 1 bis 4 C-Atomen ist, R₂ = H oder ein Alkylrest mit 1 bis 4 C-Atomen ist und X ein Rest der Formel (a) 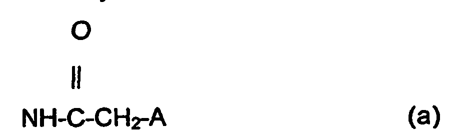 ist, wobei A = (CH₂)ₚCHNH₂-COOH mit p = 1 oder 2 ist, oder
ein Rest der Formel (b)

NH-(CH₂)ₙ-CH₂-Y (b)

ist, wobei Y = H oder NH₂ ist und n einen ganzzahligen Wert von 0 bis 6 hat, oder
ein Rest der Formel (c)

O-(CH₂)ₘCH₂Z (c)

ist, wobei Z = H, OH, COOH, NH₂, N-Pyrrolidon oder N-Pyrrolidin ist und m einen ganzzahligen Wert von 1 bis 5 hat, oder
ein Rest der Formel (e) 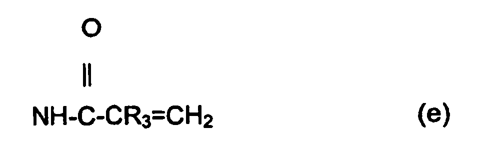 mit R₃ = H oder CH₃ ist, oder
ein Rest der Formel (f) 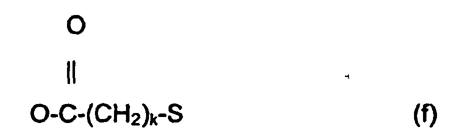 ist, wobei S = COOH oder NH₂ ist und k einen ganzzahligen Wert von 1 bis 10 hat, oder
ein Rest der Formel (g) 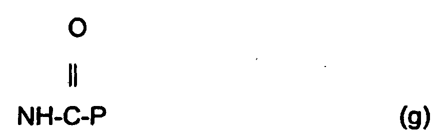 ist, wobei P ein unsubstituierter oder ein pentahalogenierter, vorzugsweise ein pentafluorierter Phenylrest ist, oder
ein Rest der Formel (h)

O-G (h)

ist, wobei G ein Glucoserest oder ein Glucosaminrest ist.

Der erfindungsgemäße Formkörper ist an der Oberfläche des Polyarylethers lediglich durch jeweils einen Substituenten der Formel (I), also spezifisch substituiert. Somit entfaltet der erfindungsgemäße Formkörper die für bestimmte Anwendungen, wie z.B. für die Adsorptionschromatographie, erforderliche spezifische Wirkung. Ferner enthält der erfindungsgemäße Formkörper keine Sulfonsäuregruppen.

Im erfindungsgemäßen Formkörper können R₁ und R₂ unabhängig von einander H oder ein Alkylrest mit 1 bis 4 C-Atomen, d.h. ein Methyl-, Ethyl-, Propyl- oder Butylrest sein, wobei es aus sterischen Gründen bevorzugt ist, dass R₁ = R₂ = H oder R₁ = R₂ = CH₃ oder R₁ = H und R₂ = CH₃ ist.

Der erfindungsgemäße Formkörper kann grundsätzlich in jeder Gestalt vorliegen, in der Polyarylether enthaltende Formkörper vorliegen können. Bevorzugt liegt er in Gestalt eines Pulvers und besonders bevorzugt in Gestalt eines porösen Pulvers vor, weil dabei die für die Wechselwirkung mit Fluiden zur Verfügung stehende Oberfläche besonders groß ist. Dies ist z.B. beim Einsatz des Pulvers als Trennmedium, etwa als Packung einer Chromatographiesäule, erwünscht. Der vor ein bestimmtes Trennproblem gestellte Fachmann kann ohne weiters geeignete Werte für Komgröße, Porengröße und Verteilung der Poren über den Komquerschnitt auswählen.

Eine weitere bevorzugte Gestalt, in welcher der erfindungsgemäße Formkörper vorliegen kann, ist die einer Hohl- oder Flachmembran, die besonders bevorzugt Poren aufweisen kann, deren Größenbereich und räumliche Verteilung über den Membranquerschnitt der vor ein konkretes Trennproblem gestellte Fachmann ebenfalls ohne weiteres auswählen kann.

Der Fachmann kann aus einer Vielzahl bekannter Formkörper auswählen, die einen Polyarylether enthalten, wobei ein Formkörper, dessen Polyarylether ein Polysulfon (PSu), Polyethersulfon (PES), Polyetherethersulfon (PEES), Polyetherketon (PEK), Polyetheretherketon (PEEK) oder ein Copolymer aus den vorstehend genannten Polymeren, vorzugsweise ein PES/PEES-Copolymer, ist, wegen der guten chemischen und thermischen Stabilität der genannten Polyarylether bevorzugt wird. Beispiele für geeignete Polyarylether sind das unter dem Handelsnamen Udel® von der Firma Solvay Advanced Polymers erhältliche PSu, das unter den Handelsnamen Ultrason® von der Firma BASF oder von der Firma Sumitomo unter dem Handelsnamen Sumi KA EXCEL erhältliche PES, das unter dem Handelsnamen Radel A® von der Firma Solvay Advanced Polymers erhältliche PES/PEES-Copolymer mit 10 % Hydrochinoneinheiten und das unter dem Handelsnamen PEEK® von der Firma Victrex® erhältliche Polyetheretherketon.

Im Prinzip kann der erfindungsgemäße Formkörper gänzlich aus einem Polyarylether bestehen. In vielen Fällen enthält der erfindungsgemäße Formkörper jedoch einen Polyarylether und weitere für seine Herstellung bekanntermaßen eingesetzte Komponenten. Beispielsweise kann eine Polyethersulfon enthaltende Membran Polyvinylpyrrolidon enthalten.

Liegt der erfindungsgemäße Formkörper in porenfreier Gestalt vor, bedeutet der Begriff "Oberfläche" zwangsläufig die geometrische Außenoberfläche. Bei einem porösen Formkörper setzt sich der Begriff "Oberfläche" erfindungsgemäß aus der geometrischen Außenoberfläche sowie der Oberfläche der Poren zusammen, die in der Regel sehr viel größer ist als die geometrische Außenoberfläche des Formkörpers.

In einem erfindungsgemäßen Formkörper ist ein Substituent der Formel (I) a)-h) an aromatische Ringe des jeweiligen Polyarylethers gebunden, wobei sich diese Ringe an der wie vorstehend definierten Oberfläche des den jeweiligen Polyarylether enthaltenden Formkörpers befinden. Durch Auflösen des erfindungsgemäßen den Polyarylether enthaltenden Formkörpers, z.B. in DMSO-D6, und ¹H-NMR - Spektroskopie an der Lösung lässt sich die Substitution nachweisen. Beispielsweise werden in einem erfindungsgemäßen Formkörper, der PEES enthält, und der entsprechend der Formel (I) a) mit 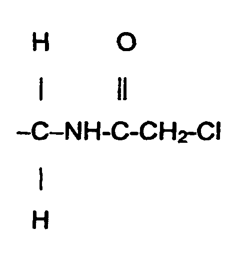 substituiert ist, Signale von 1,2,4-substituierten Aromaten bei 7,08 ppm und 6,95 ppm und Signale der eingeführten Methylengruppen im Bereich von bei 3,9 - 4,5 ppm beobachtet.

Die der Erfindung zugrunde liegende Aufgabe wird des weiteren gelöst durch ein Verfahren zur Herstellung eines einen substituierten Polyarylether enthaltenden Formkörpers, das dadurch gekennzeichnet ist, dass man wässrige H₂SO₄ vorlegt, darin ein Agens der Formel H-X löst, wobei X ein Rest der Formel (a) 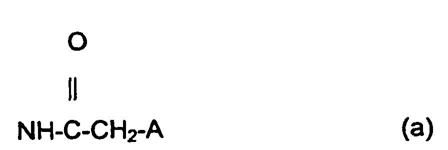 ist, wobei A = F, Cl, Br oder I oder (CH₂)ₚCHNH₂-COOH mit p = 1 oder 2 ist, oder
ein Rest der Formel (b)

NH-(CH₂)ₙ-CH₂-Y (b)

ist, wobei Y = H oder NH₂ ist und n einen ganzzahligen Wert von 0 bis 6 hat, oder
ein Rest der Formel (c)

O-(CH₂)ₘCH₂-Z (c)

ist, wobei Z = H, OH, COOH, NH₂, N-Pyrrolidon oder N-Pyrrolidin ist und m einen ganzzahligen Wert von 1 bis 5 hat, oder
ein Rest der Formel (d) 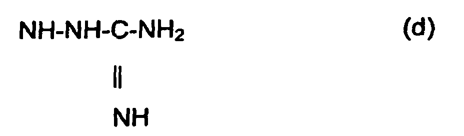 ist, oder
ein Rest der Formel (e) 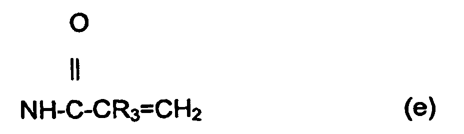 mit R₃ = H oder CH₃ ist, oder
ein Rest der Formel (f) 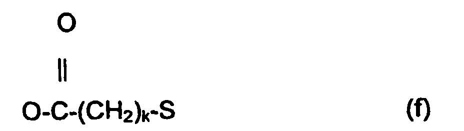 ist, wobei S = COOH oder NH₂ ist und k einen ganzzahligen Wert von 1 bis 10 hat, oder
ein Rest der Formel (g) 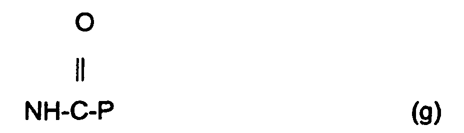 ist, wobei P ein unsubstituierter oder ein pentahalogenierter, vorzugsweise ein pentafluorierter Phenylrest ist, oder
ein Rest der Formel (h)

O-G (h)

ist, wobei G ein Glucoserest oder ein Glucosaminrest ist, und in der entstandenen Lösung eine Carbonylverbindung der Formel (II) 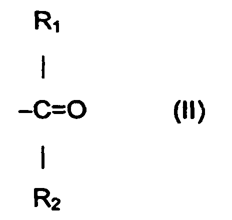 oder einen linearen bzw. cyclischen Ether der Formel (III) a) bzw. (III) b) 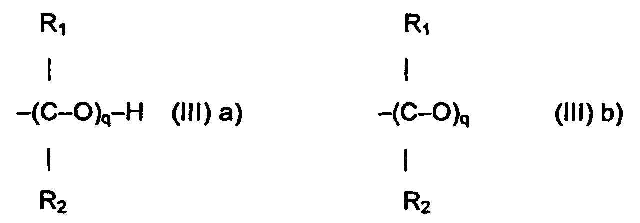 wobei R₁ und R₂ jeweils die in Anspruch 1 angegebene Bedeutung haben, löst, und q = 3 bis etwa 10000 ist, wobei die Obergrenze von q durch eine ausreichende Lösungsgeschwindigkeit des Ethers in der Schwefelsäure bestimmt ist. Dadurch wird eine Reaktionslösung erhalten, die man auf den einen Polyarylether enthaltenden Formkörper einwirken lässt.

In einer bevorzugten Ausführungsform des erfindungsgemäßen Verfahrens ist die Carbonylverbindung Formaldehyd oder Acetaldehyd.

In einer weiteren bevorzugten Ausführungsform des erfindungsgemäßen Verfahrens ist der Ether Paraformaldehyd oder Trioxan.

Als Agens der Formel H-X wird im erfindungsgemäßen Verfahren bevorzugt lodacetamid, Hexylamin, Hexamethylendiamin, Ethanol, Glucose, Glucosamin, Benzamid, Pentafluorbenzamid, N-(2Hydroxyethyl)-Pyrrolidon, N-(2-Hydroxyethyl)-Pyrrolidin oder Aminoguanidin eingesetzt, letzteres bevorzugt als Hydrochlorid. Mit diesen Agenzien wir ein besonders hoher Umsatz erzielt. Hingegen ist das zu Aminoguanidin ähnliche Diaminoguanidin (DAG) als Agens H-X ungeeignet und führt nicht zum erwünschten Produkt.

Überraschenderweise entsteht durch das Einwirkenlassen der eben beschriebenen Reaktionslösung auf den einen Polyarylether enthaltenden Formkörper ein erfindungsgemäßer Formkörper, der entsprechend dem eingesetzten Agens H-X mit einem bestimmten Substituenten der Formel (I) (a), (b), (c), (d), (e), (f), (g) oder (h) und somit spezifisch substituiert ist. Ferner muß es überraschen, dass der mittels des erfindungsgemäßen Verfahrens hergestellte substituierte Formkörper keine Sulfonsäuregruppen enthält. Der bekannte und auch in EP-B 0 540 592 beschriebene Test auf das Vorhandensein dieser Gruppen mit Methylenblau verläuft negativ. Auch ist es überraschend, dass der erfindungsgemäß hergestellte Formkörper vollständig löslich und somit nicht vernetzt ist. Schließlich ist es überraschend, dass der erfindungsgemäß substituierte Formkörper mit dem erfindungsgemäßen Verfahren auf einfache Weise, nämlich in einer einstufigen Reaktion, erhalten wird.

Im erfindungsgemäßen Verfahren kann man die Reaktionslösung grundsätzlich auf einen beliebig gestalteten und einen Polyarylether enthaltenden Formkörper einwirken lassen. Vorzugsweise lässt man die Reaktionslösung auf einen in Gestalt eines Pulvers vorliegenden Formkörper, der einen Polyarylether enthält, einwirken, wobei es aus den bereits genannten Gründen besonders bevorzugt ist, wenn das Pulver porös ist.

In einer weiteren bevorzugten Ausführungsform des erfindungsgemäßen Verfahrens kann man die Reaktionslösung auf einen in Gestalt einer Hohl- oder Flachmembran vorliegenden Formkörper, der einen Polyarylether enthält, einwirken lassen, wobei der Formkörper besonders bevorzugt Poren aufweisen kann.

Lässt man in einer weiteren bevorzugten Ausführungsform des erfindungsgemäßen Verfahrens die Reaktionslösung auf einen Formkörper einwirken, dessen Polyarylether ein Polysulfon (PSu), Polyethersulfon (PES), Polyetherethersulfon (PEES), Polyetherketon (PEK), Polyetheretherketon (PEEK) oder ein Copolymer aus den vorstehend genannten Polymeren, vorzugsweise ein PES/PEES-Copolymer, ist, erhält man einen substituierten Formkörper, der eine Polyaryletherkomponente mit guter chemischer und thermischer Stabilität aufweist. Beispiele für Handelsnamen und Bezugsquellen geeigneter Polyarylether wurden bereits vorstehend genannt.

Im Prinzip kann man im erfindungsgemäßen Verfahren die Reaktionslösung auf einen Formkörper einwirken lassen, der gänzlich aus einem Polyarylether besteht. In vielen Fällen enthält der erfindungsgemäße Formkörper jedoch einen Polyarylether und weitere für seine Herstellung bekanntermaßen eingesetzte Komponenten. Beispielsweise enthält eine Polyethersulfon enthaltende Membran Polyvinylpyrrolidon.

Im erfindungsgemäßen Verfahren resultiert ein einen Polyarylether enthaltender Formkörper, in dem ein Substituent der Formel (I) (a), (b), (c), (d), (e), (f), (g) oder (h) an aromatische Ringe des jeweiligen Polyarylethers gebunden ist, wobei sich diese substituierten Ringe auf der wie vorstehend definierten Oberfläche des Formkörpers befinden. Wie bereits ausgeführt, lässt sich die Substitution durch ¹H-NMR - Spektroskopie nachweisen.

Bevorzugt wird im erfindungsgemäßen Verfahren die wässrige H₂SO₄ in einer Konzentration von 60 bis 93 Gew.% und besonders bevorzugt in einer Konzentration von 80 bis 90 Gew.% vorgelegt.

Vorzugsweise wird im erfindungsgemäßen Verfahren das Agens H-X in der H₂SO₄ in solchen Mengen gelöst, dass das molare Verhältnis von H-X zu H₂SO₄ 0,001 bis 1, besonders bevorzugt 0,05 bis 0,5 beträgt.

Im erfindungsgemäßen Verfahren kann man zwar zur Herstellung der Reaktionslösung das bevorzugt eingesetzte Formaldehyd oder Trioxan oder Paraformaldehyd in Lösung, z.B. in Wasser, einsetzen. Jedoch zieht man es vor, Formaldehyd oder Trioxan oder Paraformaldehyd jeweils als Reinsubstanz in der Lösung aus H-X und wässriger H₂SO₄ zu lösen.

In einer weiteren bevorzugten Ausführungsform des erfindungsgemäßen Verfahrens setzt man Formaldehyd oder Trioxan oder Paraformaldehyd und H-X in solchen Mengen ein, dass das molare Verhältnis von Formaldehyd oder -(O-CH₂)- zu H-X 0,1 bis 1,0 beträgt, wobei ein Verhältnis von 0,33 bis 0,50 besonders bevorzugt wird. Dabei bedeutet -(O-CH₂)- die im erfindungsgemäßen Verfahren wirksame strukturelle Einheit des Trioxans oder Paraformaldehyds.

Des weiteren wird im erfindungsgemäßen Verfahren Formaldehyd oder Trioxan oder Paraformaldehyd und H₂SO₄ in solchen Mengen eingesetzt, dass das molare Verhältnis von Formaldehyd oder -(O-CH₂)- zu H₂SO₄ 0,001 bis 0,50 beträgt, wobei ein Verhältnis von 0,01 bis 0,08 besonders bevorzugt wird.

Zwar kann man im erfindungsgemäßen Verfahren die Reaktionslösung bei Temperaturen oberhalb Raumtemperatur herstellen. Jedoch lässt sich die Reaktionslösung für viele der erfindungsgemäßen Reaktionspartner bereits bei Raumtemperatur genügend schnell herstellen, weshalb diese Temperatur zur Herstellung der Reaktionslösung bevorzugt wird. Ferner kann man im erfindungsgemäßen Verfahren die Reaktionslösung auch bei einer Temperatur unterhalb von Raumtemperatur herstellen, sofern sich die Komponenten bei dieser Temperatur ausreichend schnell lösen.

Das Einwirken lassen der Reaktionslösung auf den einen Polyarylether enthaltenden Formkörper kann grundsätzlich auf jede Art und Weise geschehen, die gewährleistet, dass die Oberfläche des Formkörpers in Kontakt mit der Reaktionslösung ist. Z.B. kann man den Formkörper in die Reaktionslösung eintauchen.

Wie schnell ein gewünschter Substitutionsgrad erreicht wird, hängt auch von der Temperatur ab, bei der man die Reaktionslösung auf den Formkörper einwirken lässt. Lässt man die Reaktionslösung bei einer Temperatur von 30°C bis zum Siedepunkt der Reaktionslösung auf den einen Polyarylether enthaltenden Formkörper einwirken, verläuft die erfindungsgemäße Substitution in ausreichender Geschwindigkeit, weshalb dieser Temperaturbereich im erfindungsgemäßen Verfahren bevorzugt wird.

Je nach der Art des Substituenten der Formel (I) lässt sich der erfindungsgemäße Formkörper oder der nach dem erfindungsgemäßen Verfahren hergestellte Formkörper für eine Vielzahl von Einsatzzwecken verwenden, bei denen es auf eine spezifische Wirkung ankommt.

Dazu gehören, falls der Formkörper jeweils einen Substituenten der Formel (I) (a) oder (I) (b) mit Ausnahme von Y = H oder (I) (c) mit Ausnahme von Z = H oder (I) (f) gebunden enthält, die Adsorptionschromatographie. So kann beispielsweise ein mit einem Substituenten der Formel (I) (a) substituierter erfindungsgemäßer Formkörper, wenn A ein Halogen ist, zur kovalenten Bindung von Di- und/oder Triaminoguanidin verwendet werden. Der in solcher Weise modifizierte Formkörper kann wiederum zur Entfernung der Vorläufer von AGE (Advanced Glycation Endproducts) aus Blut eingesetzt werden, wodurch die Bildung der AGE, die Ursache für Krankheiten wie z.B. Arteriosklerose oder Amyloidose sind, zumindest unterdrückt werden kann. Ein mit einem Substituenten der Formel (I) (a) substituierter erfindungsgemäßer Formkörper, wobei A eine Säure der Formel (CH₂)ₚCHNH₂-COOH mit p = 1 oder 2 ist, kann zur adsorptionschromatographischen Entfernung basischer Moleküle eingesetzt werden. Ein mit einem Substituenten der Formel (I) (b) substituierter erfindungsgemäßer Formkörper, wobei Y = NH₂ ist, kann zur adsorptionschromatographischen Entfernung saurer Moleküle eingesetzt werden. Ein mit einem Substituenten der Formel (I) (c) substituierter erfindungsgemäßer Formkörper kann zur adsorptionschromatographischen Entfernung von Molekülen eingesetzt werden, die spezifisch mit der jeweiligen Endgruppe Z des Substituenten, d.h. mit den Gruppen OH, COOH, NH₂, N-Pyrrolidon bzw. N-Pyrrolidin reagieren. Ein mit einem Substituenten der Formel (I) (f) substituierter erfindungsgemäßer Formkörper kann je nachdem, ob S = COOH oder S = NH₂ ist, zur adsorptionschromatographischen Entfernung basischer oder saurer Gruppen eingesetzt werden.

Ferner kann der erfindungsgemäße Formkörper oder ein nach dem erfindungsgemäßen Verfahren hergestellter Formkörper, der jeweils einen Substituenten der Formel (I) (a) aufweist, zur Umsetzung mit einem Nucleophil verwendet werden, wobei als Nucleophil ein aliphatisches Amin, Diaminoguanidin, eine Aminosäure, ein Peptid oder ein Alkohohl bevorzugt wird.

Ein nach dem erfindungsgemäßen Verfahren hergestellter Formkörper mit einem Substituenten der Formel (I) (d) kann vorteilhaft als Anionenaustauscher verwendet werden.

Ein erfindungsgemäßer Formkörper oder ein nach dem erfindungsgemäßen Verfahren hergestellter Formkörper jeweils mit einem Substituenten der Formel (I) (e) kann vorteilhaft zur Pfropfpolymerisation verwendet werden.

Ein erfindungsgemäßer Formkörper oder ein nach dem erfindungsgemäßen Verfahren hergestellter Formkörper jeweils mit einem Substituenten der Formel (I) (g) oder der Formel (I) (b) mit Y = H kann zur Bereitstellung eines Formkörpers mit erhöhter Hydrophobie verwendet werden.

Ein erfindungsgemäßer Formkörper oder ein nach dem erfindungsgemäßen Verfahren hergestellter Formkörper jeweils mit einem Substituenten der Formel (I) (h) kann zur Bereitstellung eines Formkörpers mit erhöhter Hydrophilie oder zur Reaktion mit Cyanbromid verwendet werden.

Mit ESCA (Electron Spectroscopy for Chemical Application) lässt sich der Prozentsatz der Atome auf den äußeren Oberflächen des erfindungsgemäßen Formkörpers ermitteln, die einen Substituenten tragen, weil die Detektionstiefe dieser Methode nur wenige nm beträgt. Hinzu kommen bei einem porösen Formkörper die Substituenten, die auf der Oberfläche von Poren im Inneren des Formkörpers gebunden sind.

Falls der erfindungsgemäße Formkörper Halomethylgruppen trägt, d.h. Substituenten der Formel (I) a) mit A = F, Cl, Br oder I, kann man die Dichte der Substituenten auf der äußeren Oberfläche und auf der Oberfläche von Poren im Inneren des Formkörpers auf folgende Weise bestimmen. Zunächst werden alle Halomethylgruppen des Formkörpers mit Hexamethylendiamin (HMDA) derivatisiert. Danach werden die nmol freier Aminogruppen bestimmt, die den nmol Halomethylgruppen entsprechen. Im einzelnen geht man folgendermaßen vor:

Ist der mit Halomethylgruppen substituierte erfindungsgemäße Formkörper eine Folie oder eine Flachmembran, wird mit einer Stanze von 12 mm Durchmesser ein 1,13 cm² großes Stück herausgestanzt und zur Bestimmung der flächenbezogenen Substitutionsdichte eingesetzt. Hierbei bedeutet der Begriff "flächenbezogene Substitutionsdichte" die Anzahl nmol an Halomethylgruppen pro cm² ausgestanzter Folien- bzw. Membranfläche.

Ist der mit Halomethylgruppen substituierte erfindungsgemäße Formkörper eine Kapillarmembran, wird von der Kapillaren ein 8 cm langes Stück abgeschnitten und zur Bestimmung der längenbezogenen Substitutionsdichte eingesetzt. Dabei bedeutet der Begriff "längenbezogene Substitutionsdichte" die Anzahl nmol an Halomethylgruppen pro cm Kapillarlänge.

Zur Derivatisierung wird der mit Halomethylgruppen substituierte Formkörper 0,5 h lang bei 50 °C mit einer 5 Gew.%-igen wässrigen HMDA-Lösung umgesetzt, wobei die Halomethylgruppen mit einer Aminogruppe des HMDA reagieren. Danach wird der derivatisierte Formkörper mit vollentsalztem Wasser von überschüssigem HMDA freigewaschen. Zur Kontrolle, ob die Umsetzung mit HMDA quantitativ war, kann der derivatisierte Formkörper mit ESCA auf restliches Halogen untersucht werden. Der derivatisierte Formkörper wird zur Bestimmung der nmol freier Aminogruppen in ein Reagenzglas gegeben und 100 µl vollentsalztes Wassser und schließlich 300 µl Ninhydrin-Reagenzlösung der Fa. Sigma (Zusammensetzung nach S. Moore, Biological Chemistry, Band 243 (1968), Seite 6281) hinzugefügt. Das Reagenzglas wird mit einer Glaskugel verschlossen und in einem 99,5 °C warmen Wasserbad 30 Minuten lang erhitzt. Dabei entsteht durch die Reaktion der Aminogruppen mit Ninhydrin eine Verbindung, die bei 570 nm absorbiert. Zu der diese Verbindung enthaltenden Lösung werden 2 ml eines 1:1 Gemisches aus i-Propanol und Wasser hinzugefügt und die Absorption bei 570 nm mit einem Agilent 8454 UV-Vis-Spektrometer gemessen. Durch Vergleich dieser Absorption mit der Absorption von Eichlösungen bekannter Aminogruppenkonzentration (Eichsubstanz: 6-Aminocapron-säure) werden die nmol Aminogruppen und somit die nmol Halomethylgruppen bestimmt.

Alternativ kann man die Derivatisierung des Halomethylgruppen tragenden Formkörpers anstatt mit HMDA mit Diaminoguanidin (DAG) in ansonsten gleicher Weise durchführen und das DAG-Derivat wie bereits beschrieben zur Bestimmung der Dichte der Substituenten auf der äußeren Oberfläche und auf der Oberfläche der Poren im Inneren des Formkörpers verwenden.

Die Erfindung wird anhand der folgenden Beispiele weiter erläutert.

### Beispiel 1: Substitution einer PES/PEES-Copolymer - Flachmembran mit Chloracetamid

Aus einer Lösung von 30 Gew.% Radel A (PES/PEES-Copolymer mit ca. 10 % Hydrochinoneinheiten), 56 Gew.% Dimethylacetamid und 14 Gew.% Polyethylenglycol 200 wurde eine PES/PEES-Membran hergestellt.

35 ml 80 Gew.%ige H₂SO₄ wurden vorgelegt. Darin werden bei Raumtemperatur zuerst 14,4 g Chloracetamid und anschließend 1,0 g Paraformaldehyd gelöst. In die entstandene Reaktionslösung werden zwei je 10x4 cm große Stücke der o.g. PES/PEES-Membran gelegt. Unter Rühren bei 45 °C lässt man die Reaktionslösung ca. 16 Stunden lang auf die PES/PEES-Flachmembran einwirken.

Die substituierte PES/PEES-Flachmembran wird 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet. Danach wird die substituierte PES/PEES-Flachmembran in DMSO-D6 gelöst und ein ¹H-NMR - Spektrum aufgenommen. Das Spektrum zeigt Peaks von 1,2,4-substutuierten Aromaten bei 7,08 ppm und 6,95 ppm, Signale der eingeführten Methylenprotonen und ein Signal des Amidoprotons bei 8,9 ppm. Aus dem Spektrum ergibt sich ein Substitutionsgrad von 0,8 %. Dies bedeutet, dass in der gemessenen Lösung 0,8 % aller Wiederholungseinheiten des PES/PEES-Copolymers einen CH₂NH(O=C)CH₂Cl Substituenten tragen, so dass auf der Porenoberfläche der Membran ein Substitutionsgrad > 0,8 % vorliegt.

Durch Derivatisierung der substituierten Membran mit HMDA und Umsetzung des Derivats mit Ninhydrin wurde eine flächenbezogene Substitutionsdichte von 67 nmol CH₂NH(O=C)-CH₂Cl / cm² bestimmt.

### Beispiel 2: Substitution einer PES - Folie mit Chloracetamid

Aus einer 25 Gew.%-igen Lösung von Ultrason E6020 (PES) in Dimethylacetamid wurde eine PES - Folie hergestellt.

35 ml 80 Gew.%ige H₂SO₄ wurden vorgelegt. Darin werden bei Raumtemperatur zuerst 14,4 g Chloracetamid und anschließend 1,0 g Paraformaldehyd gelöst. In die entstandene Reaktionslösung werden zwei je 10 x 4 cm große Stücke der o.g. PES-Folie gelegt. Unter Rühren bei 45 °C lässt man die Reaktionslösung ca. 16 Stunden lang auf die PES-Folie einwirken.

Die substituierte PES-Folie wird 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet.

Durch Derivatisierung der substituierten PES-Folie mit HMDA und Umsetzung des Derivats mit Ninhydrin wurde eine flächenbezogene Substitutionsdichte von 50 nmol CH₂NH(O=C)-CH₂Cl / cm² bestimmt.

### Beispiel 3: Substitution einer PES/PEES-Copolymer - Flachmembran mit Hexylamin

35 ml 80 Gew.%ige H₂SO₄ wurden vorgelegt. Darin werden bei Raumtemperatur zuerst 10 g Hexylamin und anschließend 1,0 g Paraformaldehyd gelöst. In die entstandene Reaktionslösung werden zwei je 10 x 4,5 cm große Stücke der wie in Beispiel 1 hergestellten PES/PEES-Copolymer - Flachmembran gelegt. Unter Rühren bei 45 °C lässt man die Reaktionslösung ca. 16 Stunden lang auf die PES/PEES-Copolymer-Flachmembran einwirken.

Die substituierte PES/PEES-Copolymer - Flachmembran wird 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet.

Danach wird die PES/PEES-Copolymer - Flachmembran in DMSO-D6 gelöst und ein ¹H-NMR - Spektrum aufgenommen. Das Spektrum zeigt Peaks zwischen 4,1 und 5 ppm von Methylengruppen, die direkt am Aromaten gebunden sind. Somit enthält die Membran NH-(CH₂)₅-CH₃ Substituenten.

### Beispiel 4: Substitution einer PES - Folie mit Aminoguanidin

35 ml 80 Gew.%ige H₂SO₄ wurden vorgelegt. Darin werden bei Raumtemperatur zuerst 4,75 g Aminoguanidin-Hydrochlorid und anschließend 1,0 g Paraformaldehyd gelöst. In die entstandene Reaktionslösung werden zwei je 20 x 5 cm große Stücke der wie in Beispiel 2 hergestellten PES-Folie gelegt., Unter Rühren lässt man die Reaktionslösung zuerst ca. 16 Stunden lang bei Raumtemperatur und anschließend 96 Stunden lang bei 45 °C auf die PES-Folie einwirken.

Die substituierte PES-Folie wird 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet.

Danach wird die PES-Folie in DMSO-D6 gelöst und ein ¹H-NMR - Spektrum aufgenommen. Das Spektrum zeigt ein Singulett eines 1,3,4-substituierten Aromaten bei 6,95 ppm und 7,05 ppm.

Mit ESCA lässt sich ein Substitutionsgrad von 0,95 ± 0,05 % auf der Oberseite und von 0,62 ± 0,25 % auf der Unterseite der PES-Folie bestimmen. Dies bedeutet, dass auf der Oberseite 0,95 ± 0,05 % und auf der Unterseite 0,62 ± 0,25 % aller Atome Stickstoffatome sind. Da die Reaktion der mit NH-NH-(C=NH)-NH₂- Substituenten versehenen PES-Folie mit Ninhydrin negativ ausfällt, sind keine primären Aminogruppen vorhanden. Deshalb sind die NH-NH-(C=NH)-NH₂- Substituenten über ihre Hydrazinfunktionalität an die PES-Folie gebunden.

### Beispiel 5: Substitution einer PES - Folie mit Ethanol

35 ml 80 Gew.%ige H₂SO₄ wurden vorgelegt. Darin werden bei Raumtemperatur zuerst 4,6 g Ethanol und anschließend 1,0 g Paraformaldehyd gelöst. In die entstandene Reaktionslösung werden zwei je 20 x 5 cm große Stücke der wie in Beispiel 2 hergestellten PES-Folie gelegt. Unter Rühren bei 45 °C lässt man die Reaktionslösung 72 Stunden lang auf die PES-Folie einwirken.

Die substituierte PES-Folie wird 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet.

Danach wird die substituierte PES-Folie in DMSO-D6 gelöst und ein ¹H-NMR - Spektrum aufgenommen. Das Spektrum zeigt eindeutig, dass sich ein Ethoxybenzylether gebildet hat. Aus dem Spektrum ergibt sich ein Substitutionsgrad von 0,1 %. Dies bedeutet, dass in der gemessenen Lösung 0,1 % aller PES-Wiederholungseinheiten einen O-CH₂CH₃ Substituenten tragen, so dass auf der Porenoberfläche der Membran ein Substitutionsgrad > 0,1 % vorliegt.

### Beispiel 6: Substitution einer PES-Folie mit lodacetamid

Aus einer 25 Gew.%-igen Lösung von Ultrason E6020 (PES) in Dimethylacetamid wurde eine PES - Folie hergestellt.

35 ml 80 Gew.%ige H₂SO₄ wurden vorgelegt. Darin werden bei Raumtemperatur zuerst 6,7 g lodacetamid und anschließend 0,35 g Paraformaldehyd gelöst. In die entstandene Reaktionslösung wird ein 50 cm² großes Stück der o.g. PES-Folie gelegt. Unter Rühren bei 85 °C lässt man die Reaktionslösung 6 Stunden lang auf die PES-Folie einwirken.

Die substituierte PES-Folie wird 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet.

Mit ESCA lässt sich ein Substitutionsgrad der PES-Folie von 0,3 % bestimmen. Dies bedeutet, dass auf der Oberfläche der PES-Folie 0,3 % aller Atome lodatome sind.

Danach wird die substituierte PES-Folie in DMSO-D6 gelöst und ein ¹H-NMR-Spektrum aufgenommen. Das Spektrum zeigt Peaks von 1,2,4-substutuierten Aromaten bei 7,0 ppm und 6,95 ppm.

Durch Derivatisierung der substituierten PES-Folie mit DAG und Umsetzung des Derivats mit Ninhydrin wurde eine flächenbezogene Substitutionsdichte von 52 nmol CH₂NH(O=C)-CH₂l / cm² bestimmt.

### Beispiel 6a: Substitution einer PES-Folie mit lodacetamid

Aus einer 25 Gew.%-igen Lösung von Ultrason E6020 (PES) in Dimethylsulfoxid wurde eine PES - Folie hergestellt.

50 ml 80 Gew.%-ige H₂SO₄ wurden vorgelegt. Darin werden bei Raumtemperatur zuerst 0,92 g lodacetamid und anschließend 0,1 g Paraformaldehyd gelöst. Von der entstandenen Reaktionslösung werden ca. 2ml mit einer Pipette aufgesaugt und mit der Pipette gleichmäßig beidseitig auf ein 10x10 cm großes Stück der PES-Folie geträufelt. Die so behandelte Folie wird 1 h auf 80°C unter Stickstoff erhitzt. Die substituierte Folie wird wie im Beispiel 6 neutral gewaschen, ausgekocht und getrocknet.
Mit ESCA lässt sich ein Substitutionsgrad der PES-Folie von 0,1 % bis 0,15% bestimmen. Dies bedeutet, dass auf der Oberfläche der PES-Folie 0,1 % bis 0,15% aller Atome Iodatome sind.

### Beispiel 6b: Substitution einer PES-Flachmembran mit lodacetamid

50 ml 80 Gew.%-ige H₂SO₄ wurden vorgelegt. Darin werden bei Raumtemperatur zuerst 0,92 g lodacetamid und anschließend 0,1 g Paraformaldehyd gelöst. Von der entstandenen Reaktionslösung werden ca. 2 ml mit einer Pipette aufgesaugt und mit der Pipette gleichmäßig beidseitig auf ein 10x10 cm großes Stück einer PES Flachmembran geträufelt, die unter der Bezeichnung Micro PES 2F von der Firma Membrana GmbH erhältlich ist. Die so behandelte Membran wird 1h auf 80° C unter Stickstoff erhitzt. Die substituierte Membran wird wie im Bespiel 6 neutral gewaschen, ausgekocht und getrocknet.

Mit ESCA lässt sich ein Substitutionsgrad der Membran von 0,1 bis 0,15 % bestimmen. Dies bedeutet, dass auf der Oberfläche der Micro PES 2F-Membran 0,1-0,15 % aller Atome Iodatome sind.

Durch Derivatisierung der substituierten Membran mit HMDA und Umsetzung des Derivats mit Ninhydrin wurde eine flächenbezogene Substitutionsdichte von ca. 100 nmol Aminogruppen / cm², d. h. von ca. 100 nmol CH₂NH(O=C)-CH₂l / cm² bestimmt.

### Beispiel 7: Substitution einer PES-Folie mit Fluoracetamid

Aus einer 25 Gew.%-igen Lösung von Ultrason E6020 (PES) in Dimethylacetamid wurde eine PES - Folie hergestellt.

35 ml 80 Gew.%ige H₂SO₄ wurden vorgelegt. Darin werden bei Raumtemperatur zuerst 2,7 g Fluoracetamid und anschließend 0,35 g Paraformaldehyd gelöst. In die entstandene Reaktionslösung wird ein 50 cm² großes Stück der o.g. PES-Folie gelegt. Unter Rühren bei 85 °C lässt man die Reaktionslösung 6 Stunden lang auf die PES-Folie einwirken.

Die substituierte PES-Folie wird 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet.

Mit ESCA lässt sich ein Substitutionsgrad der PES-Folie von 0,2 % bestimmen. Dies bedeutet, dass auf der Oberfläche der PES-Folie 0,2 % aller Atome lodatome sind.

Danach wird die substituierte PES-Folie in DMSO-D6 gelöst und ein ¹H-NMR-Spektrum aufgenommen. Das Spektrum zeigt Peaks von 1,2,4-substutuierten Aromaten bei 7,0 ppm und 6,95 ppm.

Durch Derivatisierung der substituierten PES-Folie mit DAG und Umsetzung des Derivats mit Ninhydrin wurde eine flächenbezogene Substitutionsdichte von 52 nmol CH₂NH(O=C)-CH₂F / cm² bestimmt.

### Beispiel 8a: Substitution eines PES-Flachmembran mit lodacetamid

35 ml 80 Gew.%ige H₂SO₄ wurden vorgelegt. Darin werden bei Raumtemperatur zuerst 6,7 g Iodacetamid und anschließend 0,35 g Paraformaldehyd gelöst. In die entstandene Reaktionslösung wird ein 50 cm² großes Stück einer PES-Flachmembran mit einer nominellen Porengröße von 0,2 µm gelegt. Diese Membran ist unter der Bezeichnung Micro PES 2F von der Firma Membrana GmbH erhältlich. Unter Rühren bei 85 °C lässt man die Reaktionslösung 6 Stunden lang auf die PES-Flachmembran einwirken.

Die substituierte PES-Flachmembran wird 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet.

Mit ESCA lässt sich ein Substitutionsgrad der PES-Flachmembran von 0,6 % bestimmen. Dies bedeutet, dass auf der Oberfläche der PES-Flachmembran 0,6 % aller Atome lodatome sind.

Danach wird die substituierte PES-Flachmembran in DMSO-D6 gelöst und ein ¹H-NMR - Spektrum aufgenommen. Das Spektrum zeigt Peaks von 1,2,4-substutuierten Aromaten bei 7,0 ppm und 6,95 ppm.

Durch Derivatisierung der substituierten PES-Flachmembran mit DAG und Umsetzung des Derivats mit Ninhydrin wurde eine flächenbezogene Substitutionsdichte von 147 nmol CH₂NH(O=C)-CH₂l / cm² bestimmt. Von diesem Wert muß ein Blindwert von 25 nmol/cm² abgezogen werden, der auf die Reaktion des Ninhydrins mit dem in der Membran vorhandenen Polyvinylpyrrolidon zurückzuführen ist.

### Beispiel 8b:

Die in Beispiel 8a mit lodacetamid substituierte und anschließend mit Diaminoguanidin umgesetzte PES-Flachmembran wird auf ihre Fähigkeit getestet, den AGE-Vorläufer Methylglyoxal aus PBS-Puffer (8 g/l NaCl, 2,9 g/l Na₂HPO₄·12H₂O und 0,2 g/l Na₂HPO₄; pH = 7,4) zu entfernen. Dabei wird wie im Beispiel 5 von WO 02/08301 verfahren, auf deren diesbezügliche Offenbarung sich ausdrücklich bezogen wird, mit dem Unterschied, dass die mit lodacetamid substituierte und anschließend mit Diaminoguanidin umgesetzte PES-Flachmembran eingesetzt wird mit dem Ergebnis, dass diese Membran 71 % des im PBS-Puffer enthaltenen Methylglyoxals entfernte.

### Beispiel 9: Substitution eines PES-Kapillarmembranbündels mit lodacetamid

35 ml 80 Gew.%ige H₂SO₄ wurden vorgelegt. Darin werden bei Raumtemperatur zuerst 6,7 g lodacetamid und anschließend 0,35 g Paraformaldehyd gelöst. In die entstandene Reaktionslösung wird ein Bündel von 8 cm langen PES-Kapillarmembranen gelegt. Jede Kapillarmembranen dieses Bündels hat eine Außen- und Innenoberfläche, die in Summe 1,18 cm² beträgt, eine Wanddicke von 35 µm und ein Lumen von 200 µm. Diese Kapillarmembranen sind unter der Bezeichnung DIAPES von der Firma Membrana GmbH erhältlich. Bei 80 °C lässt man die Reaktionslösung 6 Stunden lang auf die PES-Kapillarmembranen einwirken.

Die substituierten PES-Kapillarmembranen werden 3 mal mit vollentsalztem Wasser (VE-Wasser) neutral gewaschen, 30 Minuten lang mit VE-Wasser ausgekocht und bei 70°C ca. 1 Stunde lang in einem Vakuumtrockenschrank bei 20 mbar getrocknet.

Durch Derivatisierung der substituierten PES-Kapillarmembranen mit DAG und Umsetzung des Derivats mit Ninhydrin wurde eine längenbezogene Substitutionsdichte von 1,38 nmol CH₂NH(O=C)-CH₂l / cm bestimmt.

## Patentansprüche

1. Formkörper enthaltend einen Polyarylether, an dessen Oberfläche Substituenten der Formel (I) 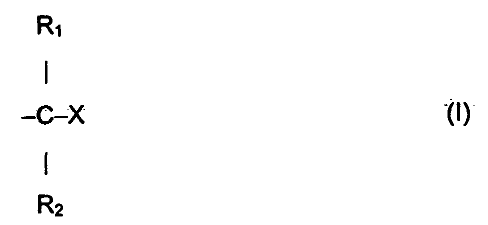 gebunden sind, wobei R₁ = H oder ein Alkylrest mit 1 bis 4 C-Atomen ist, R₂ = H oder ein Alkylrest mit 1 bis 4 C-Atomen ist und X ein Rest der Formel (a) 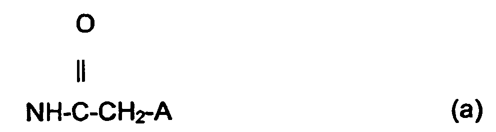 ist, wobei A = (CH₂)ₚCHNH₂-COOH mit p = 1 oder 2 ist, oder
ein Rest der Formel (b)
NH-(CH₂)ₙ-CH₂-Y (b)
ist, wobei Y = H oder NH₂ ist und n einen ganzzahligen Wert von 0 bis 6 hat, oder
ein Rest der Formel (c)
O-(CH₂)ₘCH₂-Z (c)
ist, wobei Z = H, OH, COOH, NH₂, N-Pyrrolidon oder N-Pyrrolidin ist und m einen ganzzahligen Wert von 1 bis 5 hat, oder
ein Rest der Formel (e) 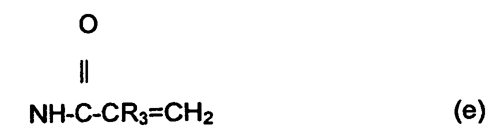 mit R₃ = H oder CH₃ ist, oder
ein Rest der Formel (f) 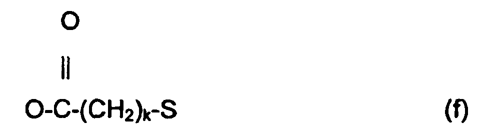 ist, wobei S = COOH oder NH₂ ist und k einen ganzzahligen Wert von 1 bis 10 hat, oder
ein Rest der Formel (g) 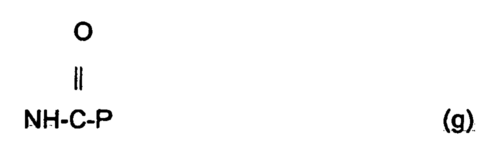 ist, wobei P ein unsubstituierter oder ein pentahalogenierter Phenylrest ist, oder ein Rest der Formel (h)
O-G (h)
ist, wobei G ein Glucoserest oder ein Glucosaminrest ist.

2. Formkörper nach Anspruch 1, **dadurch gekennzeichnet, dass** R₁ = R₂ = H oder R₁ = R₂ = CH₃ oder R₁ = H und R₂ = CH₃ ist.

3. Formkörper nach Anspruch 1 oder 2, **dadurch gekennzeichnet, dass** er in Gestalt eines Pulvers vorliegt.

4. Formkörper nach Anspruch 1 oder 2, **dadurch gekennzeichnet, dass** er in Gestalt einer Hohlfaser-oder Flachmembran vorliegt.

5. Formkörper nach einem oder mehreren der Ansprüche 1 bis 4, **dadurch gekennzeichnet, dass** der Polyarylether ein Polysulfon, Polyethersulfon, Polyetherethersulfon, Polyetherketon, Polyetheretherketon oder ein Copolymer aus den vorstehend genannten Polymeren ist.

6. Formkörper nach Anspruch 5, **dadurch gekennzeichnet, dass** das Copolymer ein Polyethersulfon/Polyetherethersulfon-Copolymer ist.

7. Verfahren zur Herstellung eines einen substituierten Polyarylether enthaltenden Formkörpers, **dadurch gekennzeichnet, dass** man wässrige H₂SO₄ vorlegt, darin
ein Agens der Formel H-X löst, wobei X ein Rest der Formel (a) 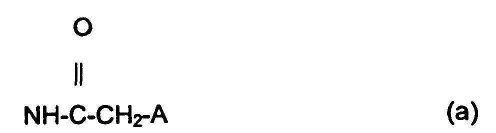 ist, wobei A = F, Cl, Br oder I oder (CH₂)ₚCHNH₂-COOH mit p = 1 oder 2 ist, oder ein Rest der Formel (b)
NH-(CH₂)ₙ-CH₂-Y (b)
ist, wobei Y = H oder NH₂ ist und n einen ganzzahligen Wert von 0 bis 6 hat, oder
ein Rest der Formel (c)
O-(CH₂)ₘCH₂-Z (c)
ist, wobei Z = H, OH, COOH, NH₂, N-Pyrrolidon oder N-Pyrrolidin ist und m einen ganzzahligen Wert von 1 bis 5 hat, oder
ein Rest der Formel (d) 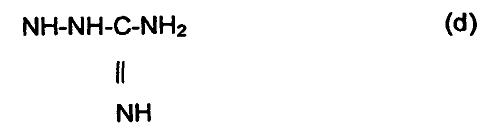 ist, oder
ein Rest der Formel (e) 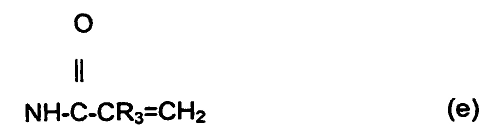 mit R₃ = H oder CH₃ ist, oder
ein Rest der Formel (f) 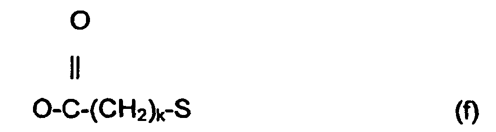 ist, wobei S = COOH oder NH₂ ist und k einen ganzzahligen Wert von 1 bis 10 hat, oder
ein Rest der Formel (g) 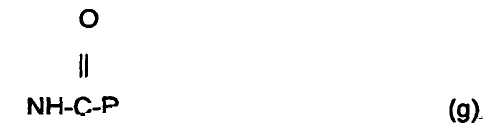 ist, wobei P ein unsubstituierter oder ein pentahalogenierter Phenylrest ist, oder ein Rest der Formel (h)
O-G (h)
ist, wobei G ein Glucoserest oder ein Glucosaminrest ist, und in der entstandenen Lösung eine Carbonylverbindung der Formel (II) 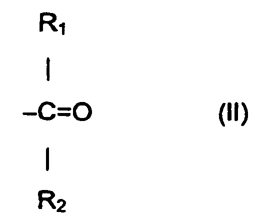 oder einen linearen bzw. cyclischen Ether der Formel (III) a) bzw. (III) b) 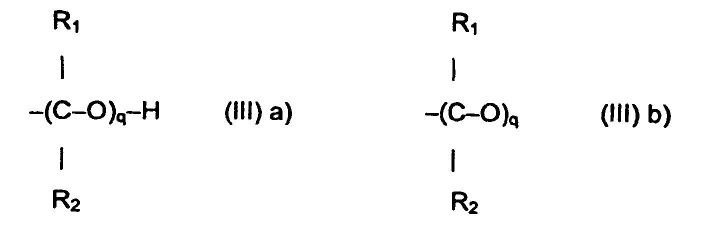 mit q = 3 bis etwa 10000,
wobei R₁ und R₂ jeweils die in Anspruch 1 angegebene Bedeutung haben, löst, wodurch eine Reaktionslösung erhalten wird, die man auf den einen Polyarylether enthaltenden Formkörper einwirken lässt.

8. Verfahren nach Anspruch 7, **dadurch gekennzeichnet, dass** die Carbonylverbindung Formaldehyd oder Acetaldehyd ist.

9. Verfahren nach Anspruch 7, **dadurch gekennzeichnet, dass** der Ether Paraformaldehyd oder Trioxan ist.

10. Verfahren nach einem oder mehreren der Ansprüche 7 bis 9, **dadurch gekennzeichnet, dass** das Agens der Formel H-X, Fluoracetamid, Chloracetamid, Iodacetamid, Hexylamin, Hexamethylendiamin, Aminoguanidin, Ethanol, Glucose, Glucosamin, Benzamid, Penta-fluorbenzamid, N-(2-Hydroxyethyl)-Pyrrolidon oder N-(2-Hydroxyethyl)-Pyrrolidin ist.

11. Verfahren nach einem oder mehreren der Ansprüche 7 bis 10, **dadurch gekennzeichnet, dass** man die Reaktionslösung auf einen in Gestalt eines Pulvers vor liegenden Formkörper, der einen Polyarylether enthält, einwirken lässt.

12. Verfahren nach einem oder mehreren der Ansprüche 7 bis 10, **dadurch gekennzeichnet, dass** man die Reaktionslösung auf einen in Gestalt einer Hohlfaser-oder Flachmembran vorliegenden Formkörper, der einen Polyarylether enthält, einwirken lässt.

13. Verfahren nach Anspruch 11 oder 12, **dadurch gekennzeichnet, dass** man die Reaktionslösung auf einen ein Polysulfon, Polyethersulfon, Polyetherethersulfon, Polyetherketon, Polyetheretherketon oder ein Copolymer aus den vorstehend genannten Polymeren enthaltenden Formkörper einwirken lässt.

14. Verfahren nach Anspruch 13, **dadurch gekennzeichnet, dass** das Copolymer ein Polyethersulfon/Polyetherethersulfon-Copolymer ist.

15. Verfahren nach einem oder mehreren der Ansprüche 7 bis 14, **dadurch gekennzeichnet, dass** 60 bis 93 Gew.%ige wässrige H₂SO₄ vorgelegt wird.

16. Verfahren nach einem oder mehreren der Ansprüche 7 bis 15, **dadurch gekennzeichnet, dass** das Agens H-X in H₂SO₄ in solchen Mengen gelöst wird, dass das molare Verhältnis von H-X zu H₂SO₄ 0,05 bis 0,5 beträgt.

17. Verfahren nach einem oder mehreren der Ansprüche 7 bis 16, **dadurch gekennzeichnet, dass** man Formaldehyd oder Trioxan oder Paraformaldehyd jeweils als Reinsubstanz in der Lösung aus H-X und wässriger H₂SO₄ löst.

18. Verfahren nach einem oder mehreren der Ansprüche 7 bis 17, **dadurch gekennzeichnet, dass** Formaldehyd oder Trioxan oder Paraformaldehyd und H-X in solchen Mengen eingesetzt werden, dass das molare Verhältnis von Formaldehyd oder -(O-CH₂)- zu H-X 0,1 bis 1,0 beträgt.

19. Verfahren nach einem oder mehreren der Ansprüche 7 bis 18, **dadurch gekennzeichnet, dass** Formaldehyd oder Trioxan oder Paraformaldehyd und H₂SO₄ in solchen Mengen eingesetzt werden, dass das molare Verhältnis von Formaldehyd oder -(O-CH₂)- zu H₂SO₄ 0,001 bis 0,50 beträgt.

20. Verfahren nach einem oder mehreren der Ansprüche 7 bis 20, **dadurch gekennzeichnet, dass** die Reaktionslösung bei Raumtemperatur hergestellt wird.

21. Verfahren nach einem oder mehreren der Ansprüche 7 bis 20, **dadurch gekennzeichnet, dass** man die Reaktionslösung bei einer Temperatur von 30 °C bis zum Siedepunkt der Reaktionslösung auf den Polyaryletherforlkörper einwirken lässt.

22. Verwendung eines Formkörpers nach einem oder mehreren der Ansprüche 1 bis 6 oder eines nach einem oder mehreren der Ansprüche 7 bis 21 hergestellten Formkörpers jeweils mit einem Substituenten der Formel (I) (a) oder (I) b) mit Ausnahme von Y = H oder (I) c) mit Ausnahme von Z = H oder (I) (f) zur Adsorptionschromatographie.

23. Verwendung eines Formkörpers nach einem oder mehreren der Ansprüche 1 bis 6 oder eines nach einem oder mehreren der Ansprüche 7 bis 21 hergestellten Formkörpers jeweils mit einem Substituenten der Formel (I) (a) zur Umsetzung mit einem Nucleophil.

24. Verwendung nach Anspruch 23, **dadurch gekennzeichnet, dass** das Nucleophil ein aliphatisches Amin, Diaminoguanidin, eine Aminosäure, ein Peptid oder ein Alkohol ist.

25. Verwendung eines nach einem oder mehreren der Ansprüche 7 bis 21 hergestellten Formkörpers jeweils mit einem Substituenten der Formel (I) (d) als Anionenaustauscher.

26. Verwendung eines Formkörpers nach einem oder mehreren der Ansprüche 1 bis 6 oder eines nach einem oder mehreren der Ansprüche 7 bis 21 hergestellten Formkörpers jeweils mit einem Substituenten der Formel (I) (e) zur Pfropfpolymerisation.

27. Verwendung eines Formkörpers nach einem oder mehreren der Ansprüche 1 bis 6 oder eines nach einem oder mehreren der Ansprüche 7 bis 21 hergestellten Formkörpers jeweils mit einem Substituenten der Formel (I) (g) oder der Formel (I) (b) mit Y = H zur Bereitstellung eines Formkörpers mit erhöhter Hydrophobie.

28. Verwendung eines Formkörpers nach einem oder mehreren der Ansprüche 1 bis 6 oder eines nach einem oder mehreren der Ansprüche 7 bis 21 hergestellten Formkörpers jeweils mit einem Substituenten der Formel (I) (h) zur Bereitstellung eines Formkörpers mit erhöhter Hydrophilie oder zur Reaktion mit Cyanbromid.

## Claims

1. A moulded body containing a polyarylether, at the surface of which substituents of formula (I) 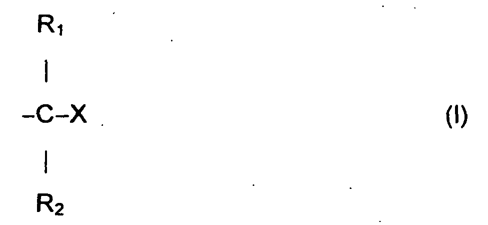 are bound, where R₁ = H or an alkyl residue with 1 to 4 C atoms, R₂ = H or an alkyl residue with 1 to 4 C atoms, and X is a residue of formula (a) 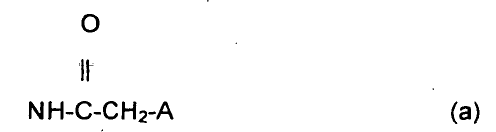 where A = (CH₂)ₚCHNH₂-COOH with p = 1 or 2, or
a residue of formula (b)
NH-(CH₂)ₙ-CH₂-Y (b)
where Y = H or NH₂ and n is an integer between 0 and 6, or
a residue of formula (c)
O-(CH₂)ₘCH₂-Z (c)
where Z = H, OH, COOH, NH₂, N-pyrrolidone or N-pyrrolidine and m is an integer between 1 and 5, or
a residue of formula (e) 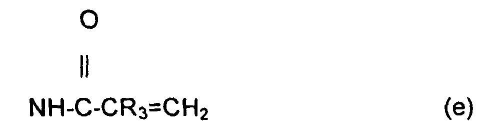 where R₃ = H or CH₃, or
a residue of formula (f) 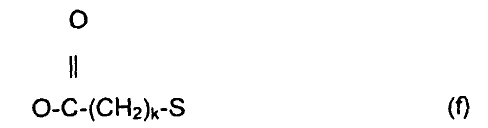 where S = COOH or NH₂ and k is an integer between 1 and 10, or
a residue of formula (g) 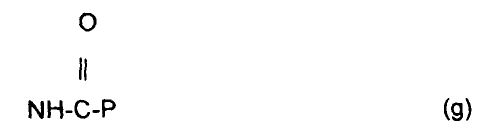 where P is an unsubstituted or pentahalogenated phenyl residue, or
a residue of formula (h)
O-G (h)
where G is a glucose residue or glucosamine residue.

2. Moulded body according to Claim 1, **characterised in that** R₁ = R₂ = H or R₁ = R₂ = CH₃ or R₁ = H and R₂ = CH₃.

3. Moulded body according to Claim 1 or 2, **characterised in that** it is in the form of a powder.

4. Moulded body according to Claim 1 or 2, **characterised in that** it is in the form of a hollow-fibre or flat membrane.

5. Moulded body according to one or more of Claims 1 to 4, **characterised in that** the polyarylether is a polysulfone, polyethersulfone, polyetherethersulfone, polyetherketone, polyetheretherketone or a copolymer of the preceding polymers.

6. Moulded body according to Claim 5, **characterised in that** the copolymer is a polyethersulfone/polyetherethersulfone copolymer.

7. A method of production of a moulded body containing a substituted polyarylether, **characterised in that** an agent of formula H-X is added to and dissolved in aqueous H₂SO₄, where X is a residue of formula (a) 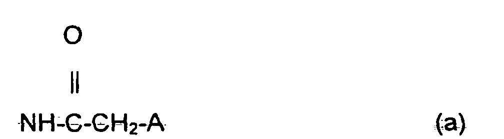 where A = F, Cl, Br or I or (CH₂)ₚCHNH₂-COOH with p = 1 or 2, or
a residue of formula (b)
NH-(CH₂)ₙ-CH₂-Y (b)
where Y = H or NH₂ and n is an integer between 0 and 6, or
a residue of formula (c)
O-(CH₂)ₘCH₂-Z (c)
where Z = H, OH, COOH, NH₂, N-pyrrolidone or N-pyrrolidine and m is an integer between 1 and 5, or
a residue of formula (d) 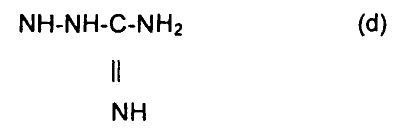 or
a residue of formula (e) 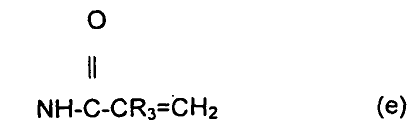 where R₃ = H or CH₃, or
a residue of formula (f) 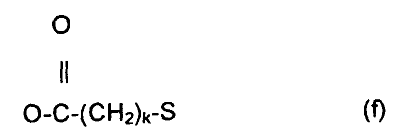 where S = COOH or NH₂ and k is an integer between 1 and 10, or
a residue of formula (g) 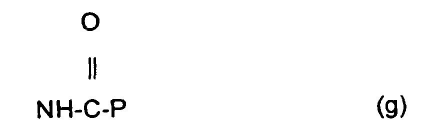 where P is an unsubstituted or pentahalogenated, preferably pentafluorinated, phenyl residue, or
a residue of formula (h)
O-G (h)
where G is a glucose residue or glucosamine residue
and a carbonyl compound of formula (II) 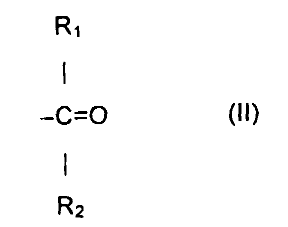 or a linear or cyclic ether of formula (III) a) or (III) b) 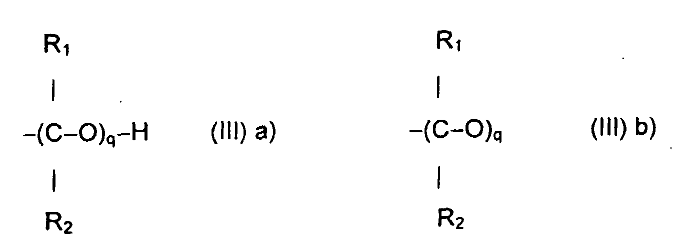 is dissolved in the resulting solution,
where q = 3 to about 10000,
and R₁ and R₂ are as specified in Claim 1, to give a reaction solution that is used to treat the moulded body containing a polyarylether.

8. Method according to Claim 7, **characterised in that** the carbonyl compound is formaldehyde or acetaldehyde.

9. Method according to Claim 7, **characterised in that** the ether is paraformaldehyde or trioxane.

10. Method according to one or more of Claims 7 to 9, **characterised in that** the agent of formula H-X is fluoroacetamide, chloroacetamide, iodoacetamide, hexylamine, hexamethylene diamine, aminoguanidine, ethanol, glucose, glucosamine, benzamide, pentafluorobenzamide, N-(2-hydroxyethyl)-pyrrolidone or N-(2-hydroxyethyl)-pyrrolidine.

11. Method according to one or more of Claims 7 to 10, **characterised in that** a moulded body that is in the form of a powder and contains the polyarylether is treated with the reaction solution.

12. Method according to one or more of Claims 7 to 10, **characterised in that** a moulded body that is in the form of a hollow-fibre or flat membrane and contains a polyarylether is treated with the reaction solution.

13. Method according to Claim 11 or 12, **characterised in that** a moulded body containing a polysulfone, polyethersulfone, polyetherethersulfone, polyetherketone, polyetheretherketone or a copolymer of the preceding polymers is treated with the reaction solution.

14. Method according to Claim 13, **characterised in that** the copolymer is a polyethersulfone/polyetherethersulfone copolymer.

15. Method according to one or more of Claims 7 to 14, **characterised in that** 60 to 93 wt.% aqueous H₂SO₄ is used.

16. Method according to one or more of Claims 7 to 15, **characterised in that** the agent H-X is dissolved in H₂SO₄ in such quantities that the molar ratio of H-X to H₂SO₄ lies between 0.05 and 0.5.

17. Method according to one or more of Claims 7 to 16, **characterised in that** formaldehyde or trioxane or paraformaldehyde, as the pure material in each case, is dissolved in the solution containing H-X and aqueous H₂SO₄.

18. Method according to one or more of Claims 7 to 17, **characterised in that** formaldehyde or trioxane or paraformaldehyde and H-X are used in such quantities that the molar ratio of formaldehyde or -(O-CH₂)- to H-X lies between 0.1 and 1.0.

19. Method according to one or more of Claims 7 to 18, **characterised in that** formaldehyde or trioxane or paraformaldehyde and H₂SO₄ are used in such quantities that the molar ratio of formaldehyde or -(O-CH₂)- to H₂SO₄ lies between 0.001 and 0.50.

20. Method according to one or more of Claims 7 to 20, **characterised in that** the reaction solution is prepared at room temperature.

21. Method according to one or more of Claims 7 to 20, **characterised in that** the polyarylether moulded body is treated with the reaction solution at a temperature between 30°C and the boiling point of the reaction solution.

22. The use of a moulded body according to one or more of Claims 1 to 6 or of a moulded body produced according to one or more of Claims 7 to 21 having a substituent of formula (I) (a) or (I) (b) with the exception of Y = H, or (I) (c) with the exception of Z = H, or (I) (f), for adsorption chromatography.

23. Use of a moulded body according to one or more of Claims 1 to 6 or of a moulded body produced according to one or more of Claims 7 to 21, and having a substituent of formula (I) (a), for reaction with a nucleophile.

24. Use according to Claim 23, **characterised in that** the nucleophile is an aliphatic amine, diaminoguanidine, an amino acid, a peptide or an alcohol.

25. Use of a moulded body produced according to one or more of Claims 7 to 21, and having a substituent of formula (I) (d), as an anion exchanger.

26. Use of a moulded body according to one or more of Claims 1 to 6 or of a moulded body produced according to one or more of Claims 7 to 21, and having a substituent of formula (I) (e), for graft copolymerisation.

27. Use of a moulded body according to one or more of Claims 1 to 6 or of a moulded body produced according to one or more of Claims 7 to 21, and having a substituent of formula (I) (g) or of formula (I) (b) with Y = H, to provide a moulded body with increased hydrophobicity.

28. Use of a moulded body according to one or more of Claims 1 to 6 or of a moulded body produced according to one or more of Claims 7 to 21, and having a substituent of formula (I) (h), to provide a moulded body with increased hydrophilicity, or for reaction with cyanogen bromide.

## Revendications

1. Corps façonné contenant un polyaryléther, à la surface duquel sont liés des substituants de formule (I) : 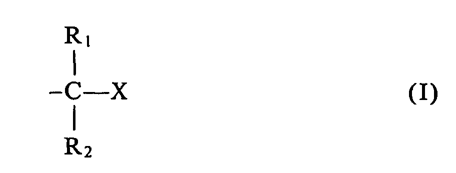 dans laquelle R₁ représente un atome d'hydrogène ou un groupe alkyle en C₁₋₄, R₂ représente un atome d'hydrogène ou un groupe alkyle en C₁₋₄, et X représente :
- un reste de formule (a)
-NH-C(=O)-CH₂-A (a)
dans laquelle A représente un reste de formule -(CH₂)ₚCH(NH₂)-COOH où p vaut 1 ou 2,
- un reste de formule (b)
-NH-(CH₂)ₙ-CH₂-Y (b)
dans laquelle Y représente un atome d'hydrogène ou un groupe amino, et n représente un nombre entier qui vaut de 0 à 6,
- un reste de formule (c)
-O-(CH₂)ₘ-CH₂-Z (c)
dans laquelle Z représente un atome d'hydrogène ou un groupe amino, hydroxyle, carboxyle, N-pyrrolidono ou N-pyrrolidino, et m représente un nombre entier qui vaut de 1 à 5,
- un reste de formule (e)
-NH-C(=O)-CR₃=CH₂ (e)
dans laquelle R₃ représente un atome d'hydrogène ou un groupe méthyle,
- un reste de formule (f)
-O-C(=O)-(CH₂)ₖ-S (f)
dans laquelle S représente un groupe carboxyle ou amino, et k représente un nombre entier qui vaut de 1 à 10,
- un reste de formule (g)
-NH-C(=O)-P (g)
dans laquelle P représente un groupe phényle sans substituant ou pentahalogéné,
- ou un reste de formule (h)
-O-G (h)
dans laquelle G représente un résidu de glucose ou de glucosamine.

2. Corps façonné conforme à la revendication 1, **caractérisé en ce que** soit R₁ et R₂ représentent chacun un atome d'hydrogène, soit R₁ et R₂ représentent chacun un groupe méthyle, soit R₁ représente un atome d'hydrogène et R₂ représente un groupe méthyle.

3. Corps façonné conforme à la revendication 1 ou 2, **caractérisé en ce qu'**il se présente sous la forme d'une poudre.

4. Corps façonné conforme à la revendication 1 ou 2, **caractérisé en ce qu'**il se présente sous la forme d'une membrane plane ou d'une membrane en fibres creuses.

5. Corps façonné conforme à l'une ou plusieurs des revendications 1 à 4, **caractérisé en ce que** le polyaryléther est un polymère de type polysulfone, poly(éther sulfone), poly(éther éther sulfone), poly(éther cétone) ou poly(éther éther cétone), ou un copolymère de tels polymères.

6. Corps façonné conforme à la revendication 5, **caractérisé en ce que** le copolymère est un copolymère de poly(éther sulfone) et de poly-(éther éther sulfone).

7. Procédé de fabrication d'un corps façonné contenant un polyaryléther portant des substituants, **caractérisé en ce qu'**on prépare une solution aqueuse d'acide sulfurique dans laquelle est dissous un agent de formule H-X où X représente :
- un reste de formule (a)
-NH-C(=O)-CH₂-A (a)
dans laquelle A représente un atome de fluor, chlore, brome ou iode, ou un reste de formule -(CH₂)ₚCH(NH₂)-COOH où p vaut 1 ou 2,
- un reste de formule (b)
-NH-(CH₂)ₙ-CH₂-Y (b)
dans laquelle Y représente un atome d'hydrogène ou un groupe amino, et n représente un nombre entier qui vaut de 0 à 6,
- un reste de formule (c)
-O-(CH₂)ₘ-CH₂-Z (c)
dans laquelle Z représente un atome d'hydrogène ou un groupe amino, hydroxyle, carboxyle, N-pyrrolidono ou N-pyrrolidino, et m représente un nombre entier qui vaut de 1 à 5,
- un reste de formule (d)
-NH-NH-C(=NH)-NH₂ (d)
- un reste de formule (e)
-NH-C(=O)-CR₃=CH₂ (e)
dans laquelle R₃ représente un atome d'hydrogène ou un groupe méthyle,
- un reste de formule (f)
-O-C(=O)-(CH₂)ₖ-S (f)
dans laquelle S représente un groupe carboxyle ou amino, et k représente un nombre entier qui vaut de 1 à 10,
- un reste de formule (g)
-NH-C(=O)-P (g)
dans laquelle P représente un groupe phényle sans substituant ou pentahalogéné,
- ou un reste de formule (h)
-O-G (h)
dans laquelle G représente un résidu de glucose ou de glucosamine,
et **en ce qu'**on dissout, dans la solution formée, un composé carbonylé de formule (II) : 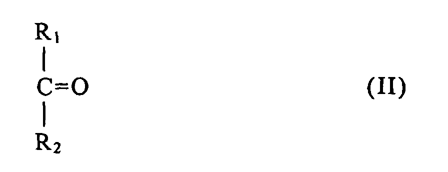 ou un éther linéaire ou cyclique, respectivement de formule (IIIa) ou (IIIb) : 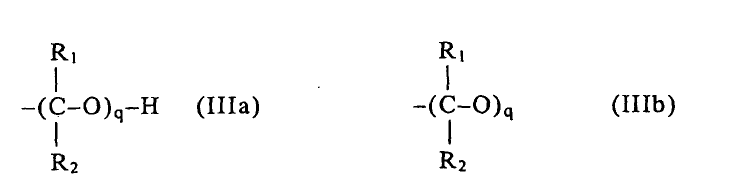 où q vaut de 3 à environ 10 000, et R₁ et R₂ ont les significations indiquées dans la revendication 1,
grâce à quoi l'on obtient une solution réactive qu'on fait agir sur un corps façonné contenant un polyaryléther.

8. Procédé conforme à la revendication 7, **caractérisé en ce que** le composé carbonylé est du formaldéhyde ou de l'acétaldéhyde.

9. Procédé conforme à la revendication 7, **caractérisé en ce que** l'éther est du paraformaldéhyde ou du trioxane.

10. Procédé conforme à l'une ou plusieurs des revendications 7 à 9, **caractérisé en ce que** l'agent de formule H-X est du fluoroacétamide, du chloroacétamide, de l'iodoacétamide, de l'hexylamine, de l'hexaméthylènediamine, de l'aminoguanidine, de l'éthanol, du glucose, de la glucosamine, du benzamide, du pentafluorobenzamide, de la N-(2-hydroxyéthyl)pyrrolidone, ou de la N-(2-hydroxyéthyl)pyrrolidine.

11. Procédé conforme à l'une ou plusieurs des revendications 7 à 10, **caractérisé en ce que** l'on fait agir la solution réactive sur un corps façonné qui se présente sous la forme d'une poudre et qui contient un polyaryléther.

12. Procédé conforme à l'une ou plusieurs des revendications 7 à 10, **caractérisé en ce que** l'on fait agir la solution réactive sur un corps façonné qui se présente sous la forme d'une membrane plane ou d'une membrane en fibres creuses et qui contient un polyaryléther.

13. Procédé conforme à la revendication 11 ou 12, **caractérisé en ce que** l'on fait agir la solution réactive sur un corps façonné qui contient un polymère de type polysulfone, poly(éther sulfone), poly(éther éther sulfone), poly(éther cétone) ou poly(éther éther cétone), ou un copolymère de tels polymères.

14. Procédé conforme à la revendication 13, **caractérisé en ce que** le copolymère est un copolymère de poly(éther sulfone) et de poly(éther éther sulfone).

15. Procédé conforme à l'une ou plusieurs des revendications 7 à 14, **caractérisé en ce qu'**on prépare une solution aqueuse à 60 à 93 % en poids d'acide sulfurique H₂SO₄.

16. Procédé conforme à l'une ou plusieurs des revendications 7 à 15, **caractérisé en ce que** l'on dilue l'agent H-X dans l'acide sulfurique en une quantité telle que le rapport molaire de H-X à H₂SO₄ vaut de 0,05 à 0,5.

17. Procédé conforme à l'une ou plusieurs des revendications 7 à 16, **caractérisé en ce que**, dans la solution constituée de l'agent H-X et de la solution aqueuse d'acide sulfurique, on dissout du formaldéhyde, du trioxane ou du paraformaldéhyde, chacun pris à l'état pur.

18. Procédé conforme à l'une ou plusieurs des revendications 7 à 17, **caractérisé en ce qu'**on emploie l'agent H-X et le formaldéhyde, le trioxane ou le paraformaldéhyde en des quantités telles que le rapport molaire du formaldéhyde ou du fragment -(O-CH₂)- à l'agent H-X vaut de 0,1 à 1,0.

19. Procédé conforme à l'une ou plusieurs des revendications 7 à 18, **caractérisé en ce qu'**on emploie l'acide sulfurique et le formaldéhyde, le trioxane ou le paraformaldéhyde en des quantités telles que le rapport molaire du formaldéhyde ou du fragment -(O-CH₂)- à H₂SO₄ vaut de 0,001 à 0,50.

20. Procédé conforme à l'une ou plusieurs des revendications 7 à 19, **caractérisé en ce qu'**on prépare la solution réactive à température ambiante.

21. Procédé conforme à l'une ou plusieurs des revendications 7 à 20, **caractérisé en ce que** l'on fait agir la solution réactive sur le corps façonné en polyaryléther à une température qui vaut de 30 °C au point d'ébullition de la solution réactive.

22. Emploi d'un corps façonné conforme à l'une ou plusieurs des revendications 1 à 6, ou d'un corps façonné fabriqué conformément à l'une ou plusieurs des revendications 7 à 21, portant dans chaque cas des substituants de formule (I)(a), (I)(b) (excepté un substituant où Y représenterait un atome d'hydrogène), (I)(c) (excepté un substituant où Z représenterait un atome d'hydrogène), ou (I)(f), pour une chromatographie d'adsorption.

23. Emploi d'un corps façonné conforme à l'une ou plusieurs des revendications 1 à 6, ou d'un corps façonné fabriqué conformément à l'une ou plusieurs des revendications 7 à 21, portant dans chaque cas des substituants de formule (I)(a), pour une réaction avec un agent nucléophile.

24. Emploi conforme à la revendication 23, **caractérisé en ce que** l'agent nucléophile est une amine aliphatique, la diaminoguanidine, un acide aminé, un peptide ou un alcool.

25. Emploi d'un corps façonné fabriqué conformément à l'une ou plusieurs des revendications 7 à 21, portant dans chaque cas des substituants de formule (I)(d), en tant qu'échangeur d'anions.

26. Emploi d'un corps façonné conforme à l'une ou plusieurs des revendications 1 à 6, ou d'un corps façonné fabriqué conformément à l'une ou plusieurs des revendications 7 à 21, portant dans chaque cas des substituants de formule (I)(e), pour une polymérisation avec greffage.

27. Emploi d'un corps façonné conforme à l'une ou plusieurs des revendications 1 à 6, ou d'un corps façonné fabriqué conformément à l'une ou plusieurs des revendications 7 à 21, portant dans chaque cas des substituants de formule (I)(g) ou de formule (I)(b) où Y représente un atome d'hydrogène, pour la préparation d'un corps façonné hautement hydrophobe.

28. Emploi d'un corps façonné conforme à l'une ou plusieurs des revendications 1 à 6, ou d'un corps façonné fabriqué conformément à l'une ou plusieurs des revendications 7 à 21, portant dans chaque cas des substituants de formule (I)(h), pour la préparation d'un corps façonné hautement hydrophile ou pour une réaction avec du bromure de cyanogène.
